# EUROPÄISCHE PATENTSCHRIFT

(11) **EP 2 422 946 B1**
(45) Veröffentlichungstag und Bekanntmachung des Hinweises auf die Patenterteilung: **25.12.2013**
(21) Anmeldenummer: 10173828.4
(22) Anmeldetag: 24.08.2010
(51) Int. Cl.: B27D 5/00, B29C 63/00, B23K 26/08

(54) **Übertragungseinrichtung für Strahlung**
Transfer device for radiation
Dispositif de transmission pour rayonnement

(43) Veröffentlichungstag der Anmeldung: 29.02.2012
(73) Patentinhaber: Homag Holzbearbeitungssysteme AG, 72296 Schopfloch (DE)
(72) Erfinder: Schmid, Johannes, 72181, Starzach/Wachendorf (DE); Petrak, Axel, 72160, Horb am Neckar (DE)
(74) Vertreter: HOFFMANN EITLE

(56) Entgegenhaltungen:
- EP-A2- 1 800 813
- WO-A1-2010/149376
- DE-C1- 4 429 913
- HAND D P ET AL: "FIBER OPTIC HIGH-QUALITY ND:YAG BEAM DELIVERY FOR MATERIALS PROCESSING", OPTICAL ENGINEERING, SOC. OF PHOTO-OPTICAL INSTRUMENTATION ENGINEERS, BELLINGHAM, Bd. 35, Nr. 2, 1. Februar 1996 (1996-02-01), Seiten 502-506, XP000631467, ISSN: 0091-3286, DOI: DOI:10.1117/1.600923

## Beschreibung

### Technisches Gebiet

Die Erfindung betrifft eine Übertragungseinrichtung zum Übertragen einer Strahlung. Die Strahlung wird in einer Strahlungsquelle erzeugt und zumindest teilweise von der Übertragungseinrichtung in ein Aggregat weitergeleitet. Das Aggregat ist Teil einer Vorrichtung zum Beschichten von Werkstückoberflächen mit einem Beschichtungsmaterial. Dabei bestehen diese Werkstücke vorzugsweise zumindest abschnittsweise aus Holz, Holzwerkstoffen, Kunststoff oder dergleichen.

Derartige Vorrichtungen eignen sich für den Einsatz in der Holzbearbeitung, insbesondere der Möbel- und Bauelementeindustrie.

### Stand der Technik

Strahlung, insbesondere Laserstrahlung, findet vielseitige Anwendungsmöglichkeiten in Fertigungsprozessen, z. B. beim Trennen, Fügen oder Beschriften. In der Holzbearbeitung wird Laserstrahlung unter anderem auch zum Beschichten von Werkstückoberflächen mit einem Beschichtungsmaterial eingesetzt. In diesem Verfahren wird die Laserstrahlung über eine Energiequelle erzeugt und anschließend zum. Wirkungsbereich weitergeleitet. Die Herausforderung ist, die Weiterleitung der Strahlung von der Energiequelle zum Wirkbereich möglichst verlustfrei und unter hermetischem Abschluss von der Umgebung zu gestalten. Üblicherweise umfassen Vorrichtungen, die diese Weiterleitung gewährleisten, optische Elemente wie beispielsweise Spiegel, die die Strahlung umlenken. Ein solcher Aufbau besitzt jedoch den Nachteil, komplex zu sein. Des Weiteren ist er nur unter Aufwand von der Umwelt abzuschirmen. Daraus ergeben sich hohe Kosten für solche Vorrichtungen. Nur so kann die Gefahr eines Strahlungsaustritts vermindert werden, der zu einer potenziellen Gefährdung der Umgebung einer solchen Vorrichtung führen würde. Dies ist aber unter allen Umständen zu vermeiden.

Weiterhin besitzt eine Weiterleitung der Strahlung über Optiken den Nachteil einer geringen Flexibilität. Dies gilt sowohl für die Anpassung der Vorrichtung an unterschiedliche Fertigungsaufgaben, als auch die Anpassung der Vorrichtung während der Fertigung.

Die WO 2010/149376 A1 ist nach veröffentlicht und offenbart ein Bearbeitungszentrum für Werkstücke, das ein Bekantungsaggregat zur Anbringung von Kantenbändern an die mit einer vorgegebenen Konturform bearbeitete Kante des Werkstücks aufweist. Es ist eine Laserstrahlung erzeugende Strahlenquelle vorgesehen, welche dazu ausgelegt ist, das Kantenband so zu präparieren, dass es beim Andrücken an die Kante des Werkstücks an diesem anhaftet. Die aus der Strahlenquelle entnommene Laserstrahlung kann über einen Einkopplungsmechanismus an einer Strahlenaustrittsposition an das Bekantungsaggregat geführt werden, wobei Werkstück und die Strahlenaustrittsposition in wenigstens einer durch zwei Raumrichtungen definierten Ebene relativ zueinander ortsveränderlich ausgebildet sind.

Die europäische Patentanmeldung EP 1 800 813 A2 offenbart ein Verfahren zur Beschichtung von Bauteilen, bei dem das Bauteil und die solide Beschichtung relativ zueinander bewegt und mittels Klebstoff im Bereich einer Andruckzone miteinander

verbunden werden. Der Klebstoff wird im Bereich einer Wirkzone durch Bestrahlung mit mindestens einem Laser aktiviert oder reaktiviert und anschließend wird durch ein Andruckelement die solide Beschichtung mit dem Bauteil verbunden. Basierend auf der Offenbarung der EP 1 800 813 A2 erfolgte die formale Aufteilung des unabhängigen Anspruchs der vorliegenden Erfindung.

### Darstellung der Erfindung

Der Erfindung liegt daher die Aufgabe zu Grunde, eine Vorrichtung zum Leiten einer Strahlung derart zu gestalten, dass diese effizient und unter Vermeidung einer Gefährdung der Vorrichtungsumgebung stattfindet. Weiterhin soll diese Vorrichtung die Möglichkeit bieten bzw. eröffnen, sich an sich verändernde Fertigungsaufgaben anpassen zu können.

Diese Aufgabe wird durch die Erfindung mit den Merkmalen aus Anspruch 1 gelöst. Vorteilhafte Ausgestaltungen der erfindungsgemäßen Vorrichtung ergeben sich aus den Unteransprüchen.

Der Erfindung liegt der Gedanke zu Grunde, mit ihrer Hilfe ein Aggregat, in dem sich der Wirkbereich der Strahlung befindet, relativ zur Strahlungsquelle aktiv und/oder passiv bewegbar zu gestalten. Hierfür wurde eine Übertragungseinrichtung erfunden, in der ein Leiter, vorzugsweise ein Lichtwellenleiter, die Weiterleitung der Strahlung in das Aggregat sicherstellt.

Durch Integration dieser Übertragungseinrichtung besitzt das Aggregat vielseitige Einsatzmöglichkeiten. Die Vielseitigkeit liegt beispielsweise in der Anpassungsmöglichkeit an den geforderten Bewegungsumfang des Aggregats während eines Beschichtungsvorgangs. So ermöglicht die Übertragungseinrichtung durch den Einsatz eines die Strahlung führenden Leiters die Verwendung bei großen geforderten Bewegungsumfängen (Stationärtechnik), genauso wie bei nur geringfügigen Anforderungen bezüglich Beweglichkeit (Durchlauftechnik) . Somit ist es möglich, sowohl Werkstücke mit komplexer Geometrie als auch mit einfacher Geometrie zu bearbeiten. Die Verwendung eines Leiters, vorzugsweise eines Lichtwellenleiters, ermöglicht dabei eine nahezu verlustlose Übertragung, kombiniert mit einer langen Standzeit und nur geringem Wartungsaufwand.

In der erfindungsgemäßen Vorrichtung weist die Übertragungseinrichtung einen auf den Drehpunkt des Aggregats bezogen ortsfesten Einleitungspunkt in den Leiter sowie einen auf das Aggregat bezogen ortsfesten Weiterieitungspunkt in das Aggregat auf. Dabei schließt sich an den Weiterleitungspunkt bevorzugt mindestens eine zum Aggregat gehörende Komponente an, die vorzugsweise die Strahlung in ihrer Geometrie, Richtung oder Stärke verändert. Durch den auf den Drehpunkt des Aggregats bezogen ortsfeste Einleitungspunkt und den auf das Aggregat bezogen ortsfesten Weiterieitungspunkt wird sichergestellt, dass jegliche Veränderung der Ausrichtung zwischen Aggregat und Strahlquelle innerhalb des Bereichs zwischen Einleitungspunkt und Weiterleitungspunkt ausgeglichen werden kann. Im Umkehrschluss hat dies zur Folge, dass zwischen der Strahlquelle und dem Einleitungspunkt sowie zwischen dem Weiterleitungspunkt und dem Aggregat Rotation vermieden wird, was zum Beispiel bei Einsatz eines zuführenden Leiters zu ungewünschten Torsionsbelastungen führen würde.

In einer bevorzugten Ausgestaltung der erfindungsgemäßen Vorrichtung befindet sich zwischen der Strahlquelle und dem Einleitungspunkt bevorzugt mindestens ein Verbindungselement. Dieses Verbindungselement kann beispielsweise ein Lichtwellenleiter, insbesondere mit einer Faserkopplung, oder ein sonstiges optisches Element sein. Letzteres verändert die Strahlung möglicherweise in Richtung, Geometrie oder Stärke. Des Weiteren kann es von Vorteil sein, dieses Verbindungselement lösbar und feststellbar auszuführen. Die Lösbarkeit und Feststellbarkeit des Verbindungselements sollte dabei bevorzugt ohne Beschränkung der Anzahl dieser Vorgänge wiederholbar sein. Eine solche Ausführung des Verbindungselements hat den Vorteil, dass das Aggregat mit der Übertragungseinrichtung von der Strahlquelle abgekoppelt werden kann. Dies ist möglicherweise notwendig, um zum Beispiel ein defektes Aggregat und/oder eine defekte Strahlungsquelle auszutauschen oder einen Defekt zu beheben. Weiterhin eröffnet eine solche wiederholbare An- und Abkopplung des Verbindungselements in vorteilhafter Weise die Möglichkeit an unterschiedliche Fertigungsaufgaben angepasste Aggregate zu verwenden und erhöht somit die Fertigungstiefe der Vorrichtung.

In einer weiteren bevorzugten Ausführung der vorliegenden Erfindung befindet sich zwischen dem Weiterleitungspunkt und einem im Aggregat befindlichen Komponente mindestens ein Verbindungselement. Dieses Verbindungselement ist vorzugsweise als Lichtwellenleiter, insbesondere mit einer Faserkopplung, oder als ein sonstiges optisches Element ausgeführt. Dabei ist es als vorteilhaft anzusehen, wenn das Verbindungselement an- und abgekoppelt werden kann und wenn dieser Vorgang beliebig oft wiederholbar ist. Dies hat den Vorteil, dass das Aggregat von der Übertragungseinrichtung und der Strahlquelle vollständig abgekoppelt werden kann.

Damit ist es zum Beispiel möglich auf einfache Art und Weise ein defektes Aggregat und/oder eine defekte Strahlungsquelle schnell und kostengünstig auszutauschen und ohne eine Unterbrechung des Beschichtungsprozesses zu reparieren. Weiterhin ist es möglich, durch Austauschen des Aggregats dieses an die jeweiligen Anforderungen des Beschichtungsprozesses anzupassen und somit die Fertigungstiefe der Beschichtungsvorrichtung zu erhöhen.

In einer besonders bevorzugten Ausgestaltung der erfindungsgemäßen Vorrichtung besitzt die Übertragungseinrichtung mindestens ein Umlaufelement, vorzugsweise als Scheibe ausgeführt, wobei der Mittelpunkt von mindestens einem Umlaufelement mit der Rotationsachse bzw. Drehpunkt des Aggregats übereinstimmt. Dabei wird das Umlaufelement von dem Leiter, der sich zwischen Einleitungspunkt und Weiterleitungspunkt befindet, zumindest teilweise umlaufen. Das Ausmaß des Umlaufs des Leiters ändert sich mit dem Ausmaß der Rotation des Aggregats relativ zur Energiequelle.

Die Verwendung eines Umlaufelements hat den Vorteil eine Rotation des Aggregats relativ zur Energiequelle durch definiertes Auf- und Abwickeln aufzufangen. Eine Übereinstimmung des Mittelpunkts des Umlaufelements mit der Rotationsachse des Aggregats hat den Vorteil, dass die Rotationsbewegung des Aggregats während des Beschichtungsprozesses aus der Sicht eines globalen Koordinatensystems lediglich auch als Rotation auf das Umlaufelement wirken. Im Umkehrschluss hätte ein nicht auf der Rotationsachse des Aggregats liegender Mittelpunkt des Umlaufelements zur Folge, dass es aus der Sicht eines globalen Koordinatensystems bei einer Rotation des Aggregats zu einer kombinierten Translation und Rotation des Umlaufelements kommen würde. Dies erfordert eine höhere Beweglichkeit des Leiters, die zumindest zum Teil mit erhöhter Biegung oder gar Torsion verbunden sein kann.

Lichtwellenleiter ermöglichen aber nur dann eine verlustlose Übertragung der Strahlung, solange sie nicht stark gebogen oder tordiert werden. Hinzu kommt, dass Lichtwellenleiter zumeist aus Mineralglas oder organischem Glas bestehen und somit unter mechanischer Belastung leicht anreißen und brechen. Eine Übereinstimmung des Mittelpunkts des Umlaufelements mit der Rotationsachse des Aggregats hat den Vorteil, dass ein durch Biegung auftretender Energieverlust durch die Außenseite des Leiters oder ein Anreißen sowie Brechen des Leiters verhindert wird. Situationen die in diesem Zusammenhang eine Gefährdung der Umgebung der Beschichtungsvorrichtung mit sich ziehen, werden somit vermieden. Dies leistet wiederum einen Beitrag zur Erhöhung der Arbeitssicherheit.

In einer weiteren bevorzugten Ausführungsform der Erfindung sind mindestens zwei Umlaufelemente aktiv oder passiv relativ aufeinander zu und voneinander weg bewegbar. Durch das Ausmaß des Umlaufs der Leiters um das Umlaufelement im Verlauf des Betriebs des Aggregats, verändert sich die effektive Leiterlänge zwischen Einleitungs- und Weiterleitungspunkt. Die relativ zueinander bewegbaren Umlaufelemente haben den Vorteil, dass sie die Änderung der effektiven Leiterlänge ausgleichen und so einen definierten Aufwicklungspfad des Leiters in der Übertragungseinrichtung sicherstellen.

In einer weiteren besonders bevorzugten Ausführungsform der Erfindung besitzt mindestens ein Umlaufelement mindestens zwei Stützelemente, die aktiv oder passiv relativ zum Mittelpunkt des Umlaufelements verschiebbar ausgeführt sind. Der Leiter umläuft dabei zumindest teilweise die an dem Umlaufelement angebrachten Stützelemente. Diese Ausführungsform hat insbesondere den Vorteil, dass über Verschieben der Stützelemente der Radius des Umlaufelements angepasst werden kann. Dabei erfolgt diese Anpassung vorzugsweise in Abhängigkeit der Rotation des Aggregats um dessen Rotationsachse. Damit kann ein einziges derartig aufgebautes Umlaufelement genügen, um die beim Bewegen des Aggregats notwendige Anpassung der effektiven Leiterlänge sicherzustellen.

In einer weiteren bevorzugten Ausgestaltung der erfindungsgemäßen Vorrichtung ist mindestens ein Umlaufelement feststehend oder drehbar relativ zum Aggregat gelagert. Daraus folgt, dass es je nach Ausführungsform zu einer Relativbewegung zwischen dem Leiter und dem Umlaufelement während des Aufwickelvorgangs kommen kann. Ist das Umlaufelement drehbar relativ zum Aggregat gelagert, so wird eine Relativbewegung zwischen Leiter und Umlaufelement während des Aufwickelns vermieden. Ist das Umlaufelement relativ zum Aggregat feststehend gelagert, so wickelt sich der Leiter um das Umlaufelement, indem er über das Umlaufelement und/oder dessen Stützelemente gleitet. Ein feststehend gelagertes Umlaufelement hat den Vorzug eines sehr einfachen Aufbaus, während ein drehbar gelagertes Umlaufelement eine geringere Belastung des Leiters und dessen Oberfläche zur Folge hat. Es ist jedoch vorstellbar, auch bei einem feststehenden Umlaufelement eine Schonung des Leiters über eine auf dem Umlaufelement befindliche Gleitfläche zu erreichen.

In einer bevorzugten Ausgestaltung der erfindungsgemäßen Vorrichtung umläuft der Leiter mindestens ein Umlaufelement spiralförmig oder schraubenförmig. Dies hat den Vorteil, dass sich der Leiter bei mehrfachem Umlauf des Umlaufelements definiert aufwickelt und es nicht zu einem Überkreuzen des Leiters mit sich selbst während des Wickelvorgangs kommt.

In einer weiteren Ausführungsform der vorliegenden Erfindung ist das Aggregat in eine geeignete Aufnahme, insbesondere eine Spindeleinheit, einwechselbar ausgeführt. Die Einwechselbarkeit des Aggregats über eine Aufnahme (insbesondere Spindeleinheit) hat den Vorteil, dass im Falle von Wartung, Reparatur oder Umrüstung der Vorrichtung, diese einfach schnell und kostengünstig durchgeführt werden kann. Weiterhin ergibt sich durch diese vorteilhafte Ausführung, dass in ihrem Funktionsumfang unterschiedliche Aggregate in die Beschichtungsvorrichtung integriert werden können und so der Funktionsumfang der Fertigungsmaschine beliebig erweiterbar ist.

In einer weiteren bevorzugten Ausgestaltung der erfindungsgemäßen Vorrichtung können mit Hilfe der Strahlung Energie und/oder Signale übertragen werden. Vor allem eine zusätzliche Übertragung von Signalen während des Fertigungsprozesses bzw. vor oder nach dem Fertigungsprozess eröffnet die Möglichkeit, das Aggregat über die Strahlung zu steuern. So ist es denkbar, dass die Komponenten, die die Strahlung in ihrer Geometrie, Richtung oder Stärke verändern, in der Ausführung ihrer Aufgabe beeinflusst werden können bis hin zur An- und Abschaltung ihrer jeweiligen Funktionen.

### Kurze Beschreibung der Figuren

- Figur 1: zeigt schematisch die Beschichtungsvorrichtung mit Aggregat und Übertragungseinrichtung. Die übertragungsvorrichtung umfasst ein Umlaufelement und vier bewegliche Stützelemente.
- Figur 2: zeigt schematisch ein Aggregat mit Übertragungseinrichtung, die zwei Umlaufelement umfasst.
- Figur 3: zeigt schematisch eine Übertragungseinrichtung bestehend aus einem Umlaufelement und vier beweglichen Stützelementen.

### Ausführliche Beschreibung bevorzugter Ausführungsformen der Erfindung

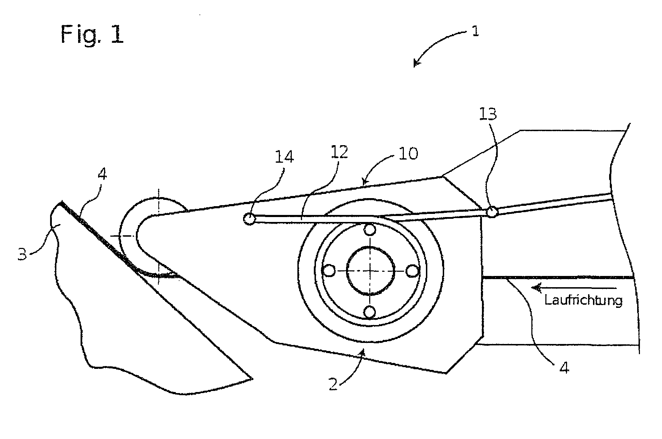

Eine Beschichtungsvorrichtung 1 als bevorzugte Ausführungsform der Erfindung ist in Fig. 1 schematisch in einer Draufsicht dargestellt. Die Beschichtungsvorrichtung 1 dient zum Beschichten von Werkstücken 3 mit einem Beschichtungsmaterial 4, beispielsweise im Bereich der Möbel- und Bauelementeindustrie. Die bestehen bevorzugt zumindest abschnittsweise aus Holz, Holzwerkstoffen, Kunststoff oder dergleichen bestehen, obgleich die Erfindung nicht hierauf beschränkt ist.

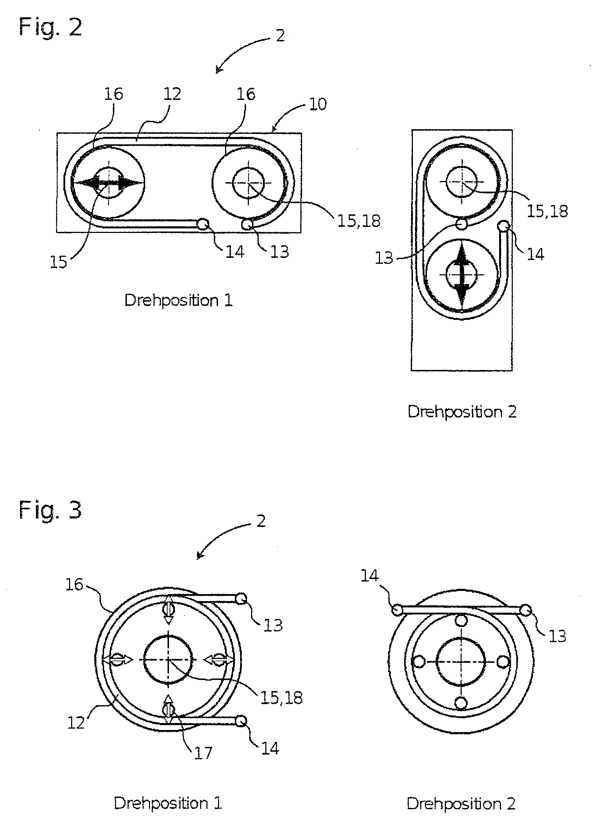

Die Vorrichtung 1 umfasst ein (Beschichtungs-)Aggregat 10 mit einer Übertragungseinrichtung 2. Die Übertragungseinrichtung 2 ist in Figur 2 in zwei unterschiedlichen Drehpositionen dargestellt. Zum einen in der Drehposition 1 und zum anderen um 90° gegen den Uhrzeigersinn gedreht in der Drehposition 2. Dabei ist die. Drehung um 90° ein rein willkürlich gewähltes Beispiel und kann durch beliebige Gradzahlen, die auch mehrfache Umdrehungen einschließen, ersetzt werden. In der Ausführungsform in Figur 2 ist der Einleitungspunkt 13 ortsfest bezogen auf den Drehpunkt des Aggregats 18. Nach dem Einleitungspunkt 13 folgt ein Leiter 12, vorzugsweise ein Lichtwellenleiter, der den Einleitungspunkt 13 mit dem Weiterleitungspunkt 14 verbindet. Der Weiterleitungspunkt 14 ist anders als der Einleitungspunkt 13 ortsfest in Bezug zum Aggregat 10. Der Zugang der Strahlung zum Einleitungspunkt 13 kann dabei aus jeder beliebigen Richtung erfolgen. Auch muss sich der Einleitungspunkt 13 nicht an der in Figur 2 dargestellten Position befinden, sondern kann auch jede beliebige andere Position am Aggregat 10 einnehmen. Gleiches gilt entsprechend für den Weiterleitungspunkt 14.

Nach dem Einleitungspunkt 13 umläuft der Leiter zunächst ein erstes Umlaufelement 16, dessen Mittelpunkt, wie weiter oben erläutert, vorteilhaft mit der Rotationsachse 18 des Aggregats 10 übereinstimmt. Das Umlaufelement 16 kann dabei fest oder drehbar in Bezug auf das Aggregat 10 gelagert sein. Gegenüberliegend auf der gleichen Fläche des Aggregats 10 befindet sich in der Ausführungsform in Figur 2 ein zweites Umlaufelement 16, welches nach dem ersten Umlaufelement 16 von dem Leiter umlaufen wird. Dabei lässt sich das zweite Umlaufelement 16 relativ in Richtung oder Gegenrichtung des ersten Umlaufelements 16 aktiv oder passiv verschieben. Weiterhin ist es möglich das zweite Umlaufelement 16 in seinem rotatorischen Freiheitsgrad fest oder beweglich zu lagern. Der die beiden Umlaufelement 16 umlaufende Leiter 12 umläuft dabei die Umleitungselemente bevorzugterweise nur einmal, um eine mehrfache Umlenkung des Lichtwellenleiters zu vermeiden.

Das in der Figur 2 in der Drehposition 2 befindliche Aggregat 10 verdeutlicht die Funktionsweise dieser Ausführungsform. Der ortsfest zum Drehpunkt des Aggregats 18 liegende Einleitungspunkt 13 hat seine Position beibehalten. Durch die Drehung um die Rotationsachse 18 um 90° gegen den Uhrzeigersinn bedingt umläuft der Leiter 12 das erste Umlaufelement 16 nunmehr zusätzlich um eine viertel Umdrehung. Bedingt durch das zusätzliche Umlaufen des Leiters 12 um das Umlaufelement 16 verkürzt sich die effektive Leiterlänge, was durch eine Verkürzung des Abstands zwischen dem ersten Umlaufelement 16 und dem zweiten Umlaufelement 16 um die entsprechende Bogenlänge der Drehung um 90° um das Umlaufelement 16 ausgeglichen wird. Vorteilhaft bei dieser Ausführung ist insbesondere der definierte und zugleich frei wählbare Radius, den der Leiter 12 umläuft. Durch die dadurch mögliche gezielte Wahl des Biegeradius kann somit ein Energieverlust bei der Übertragung der Strahlung oder gar eine Beschädigung des Leiters durch die Übertragungseinrichtung verhindert werden.

Die Ausführung der Übertragungseinrichtung in Figur 3 umfasst lediglich ein Umlaufelement 16, auf dem insgesamt vier Stützelemente 17 befestigt sind, die sich in Richtung und Gegenrichtung des Mittelpunkts des Umlaufelements 16 bewegen können. Die beispielhafte Ausführungsform der Figur 3 ist dabei ebenfalls für zwei verschiedene Drehpositionen dargestellt. Zum einen in der Ausgangsposition, der Drehposition 1, zum anderen nach einer Rotation um die Rotationsachse des Aggregats 10 um 180° gegen den Uhrzeigersinn. Der Leiter 12 kann dabei die Stützelemente 17 auf dem dargestellten Umlaufelement 16 beliebig oft umlaufen, wobei das Umlaufen des Umlaufelements 16 vorzugsweise einem spiralförmigen oder schraubenförmigen Pfad folgt. Um jedoch Energieverluste möglichst gering zu halten und den Leiter möglichst wenig Biegung auszusetzen, werden die Stützelemente 17 bevorzugt so wenig wie möglich umlaufen. Der Mittelpunkt des Umlaufelements 16 befindet sich in der dargestellten Ausführungsform in Figur 3 bevorzugt auf der Rotationsachse 18 des Aggregats 10.

Nach einer Drehung um 180° befindet sich der auf den Drehpunkt des Aggregats 18 bezogen ortsfeste Einleitungspunkt 13 weiterhin vom globalen Koordinatensystem aus gesehen an derselben Stelle. Hingegen hat der Weiterleitungspunkt 14, der ortsfest zum Aggregat 10 ist, seine Position entsprechend der durchgeführten Rotation des Aggregats 10 geändert. Der Leiter 12 umläuft die Stützelemente 17 nunmehr um eine zusätzliche halbe Umdrehung. Die durch die zusätzliche halbe Umdrehung verursachte Verkürzung der effektiven Leiterlänge wird durch eine Bewegung der Stützelemente 17 zum Mittelpunkt 15, die eine Verkleinerung des Umlaufradius zur Folge hat, kompensiert.

Der Vorteil dieser Ausführungsform liegt insbesondere in ihrer kompakten Bauform. Die Verschiebung der Stützelemente 17 erfolgt vorzugsweise gekoppelt an die Drehung des Aggregats um die Drehachse 18. Weiterhin hat die Ausführungsform in Figur 3 den Vorteil, durch die kompakte Bauform und Konstruktion auch mehrfache Drehungen des Aggregats 10 zu ermöglichen.

Als Alternative ist es in einer weiteren vorteilhaften Ausführungsform möglich, eine Veränderung der effektiven Leiterlänge über eine kegelförmige Form des Drehelements auszugleichen. Der Kegeldurchmesser und damit der Kegelumfang verändern sich über die Höhe des Kegels. Dadurch kann eine durch die Aggregatdrehung verursachte Veränderung der effektiven Leiterlänge durch aktive und/oder passive Positionierung des umlaufenden Leiters auf der Kegelhöhe kompensiert werden.

Grundsätzlich besteht die Möglichkeit das Aggregat 10 über eine Spindel einwechselbar auszuführen. Genauso ist es aber auch möglich, das Aggregat als permanenten Bestandteil in die Vorrichtung 1 zu integrieren.

## Patentansprüche

1. Vorrichtung (1) zum Beschichten von Werkstücken, die bevorzugt zumindest abschnittsweise aus Holz, Holzwerkstoffen, Kunststoff oder dergleichen bestehen, mit
einer Strahlungsquelle zum Erzeugen einer Strahlung, einem Aggregat (10) zum Aufbringen eines Beschichtungsmaterials auf eine Oberfläche eines Werkstücks, das relativ zur Strahlungsquelle aktiv und/oder passiv bewegbar ist,
**dadurch gekennzeichnet, dass**
die Vorrichtung eine Übertragungseinrichtung (2) mit einem Leiter zur Übertragung der Strahlung von der Strahlungsquelle zu dem Aggregat (10) aufweist, wobei die Übertragungseinrichtung (2) zwischen der Strahlungsquelle und dem Aggregat (10) angeordnet ist und einen auf einen Drehpunkt des Aggregats (18) bezogen ortsfesten Einleitungspunkt (13) in den Leiter (12) sowie einen auf das Aggregat (10) bezogen ortsfesten Weiterleitungspunkt (14) in das Aggregat aufweist, wobei die Übertragungseinrichtung (2) eingerichtet ist, zwischen dem Einleitungspunkt (13) und dem Weiterleitungspunkt (14) eine Veränderung der Ausrichtung zwischen dem Aggregat (10) und der Strahlungsquelle auszugleichen.

2. Vorrichtung nach Anspruch 1, **dadurch gekennzeichnet, dass**
sich an den Weiterleitungspunkt (14) mindestens eine zum Aggregat (10) gehörende Komponente anschließt, insbesondere eine Komponente, die die Strahlung in ihrer Geometrie, Richtung oder Stärke verändert.

3. Vorrichtung nach Anspruch 2, **dadurch gekennzeichnet,**
**dass** sich zwischen der Strahlungsquelle und dem Einleitungspunkt (13) bevorzugt mindestens ein Verbindungselement befindet, vorzugsweise ein Lichtwellenleiter, insbesondere mit einer Faserkopplung, oder ein sonstiges optisches Element.

4. Vorrichtung nach Anspruch 2 oder 3, **dadurch gekennzeichnet,**
**dass** sich zwischen dem Weiterleitungspunkt (14) und einer im Aggregat (10) befindlichen Komponente bevorzugt mindestens ein Verbindungselement befindet, vorzugsweise ein Lichtwellenleiter, insbesondere mit einer Faserkopplung, oder ein sonstiges optisches Element.

5. Vorrichtung nach einem der vorhergehenden Ansprüche, **dadurch gekennzeichnet,**
**dass** die Übertragungseinrichtung (2) mindestens ein Umlaufelement (16), vorzugsweise als Scheibe oder Kegel ausgeführt, umfasst, wobei der Mittelpunkt (15) von mindestens einem Umlaufelement (16) mit dem Drehpunkt (18) des Aggregats (10) übereinstimmt und mindestens ein Umlaufelement (16) von dem Leiter (12) mindestens einmal umlaufen wird.

6. Vorrichtung nach Anspruch 5, **dadurch gekennzeichnet,**
**dass** mindestens zwei Umlaufelemente (16) aktiv oder passiv relativ aufeinander zu und voneinander weg bewegbar sind.

7. Vorrichtung nach einem der Ansprüche 5-6, **dadurch gekennzeichnet,**
**dass** in mindestens einem Umlaufelement (16) mindestens zwei Stützelemente (17) integriert sind, die aktiv oder passiv relativ zum Mittelpunkt (15) des Umlaufelements (16) verschiebbar sind und der Leiter (12) das Umlaufelement (16) über die Stützelemente (17) umläuft.

8. Vorrichtung nach einem der Ansprüche 5-7, **dadurch gekennzeichnet,**
**dass** mindestens ein Umlaufelement (16) feststehend oder drehbar relativ zum Aggregat (10) gelagert ist.

9. Vorrichtung nach einem der Ansprüche 5-8, **dadurch gekennzeichnet,**
**dass** der Leiter (12) mindestens ein Umlaufelement (16) spiralförmig oder schraubenförmig umläuft.

10. Vorrichtung nach einem der vorhergehenden Ansprüche, **dadurch gekennzeichnet,**
**dass** das Aggregat (10) in eine geeignete Aufnahme, insbesondere eine Spindeleinheit, einwechselbar ausgeführt ist.

11. Vorrichtung nach einem der vorhergehenden Ansprüche, **dadurch gekennzeichnet,**
**dass** mit der Strahlung Energie und/oder Signale übertragen werden.

12. Vorrichtung nach einem der vorhergehenden Ansprüche, **dadurch gekennzeichnet,**
**dass** der Leiter (12) ein Lichtwellenleiter ist.

13. Vorrichtung nach einem der vorhergehenden Ansprüche, **dadurch gekennzeichnet,**
**dass** die Strahlung Laserstrahlung ist.

## Claims

1. Apparatus (1) for coating workpieces which are preferably made at least in sections of wood, wood materials, plastic or the like, comprising
a radiation source for generating radiation,
a unit (10) for applying a coating material to a surface of a workpiece, which can be moved actively and/or passively relative to the radiation source,
**characterised in that**
the apparatus has a transmission device (2) having a conductor for transmitting the radiation from the radiation source to the unit (10), wherein the transmission device (2) is disposed between the radiation source and the unit (10) and has a lead-in point (13) into the conductor (12) that is fixed in relation to a pivot point of the unit (18) and a relaying point (14) into the unit that is fixed in relation to the unit (10), wherein the transmission device (2) is designed to compensate for a change in orientation between the unit (10) and the radiation source between the lead-in point (13) and the relaying point (14).

2. Apparatus according to claim 1, **characterised in that** attached to the relaying point (14) is at least one component forming part of the unit (10), in particular a component which changes the geometry, direction or strength of the radiation.

3. Apparatus according to claim 2, **characterised in that**
there is located between the radiation source and the lead-in point (13) preferably at least one connection element, preferably a fibre optic cable, in particular with a fibre coupling, or some other optical element.

4. Apparatus according to claim 2 or 3, **characterised in that**
there is located between the relaying point (14) and a component located within the unit (10) preferably at least one connection element, preferably a fibre optic cable, in particular with a fibre coupling, or some other optical element.

5. Apparatus according to any of the preceding claims, **characterised in that** the transmission device (2) comprises at least one revolving element (16), preferably in the form of a disc or cone, wherein the centre (15) of at least one revolving element (16) corresponds to the pivot point (18) of the unit (10) and the conductor (12) runs at least once around at least one revolving element (16).

6. Apparatus according to claim 5, **characterised in that**
at least two revolving elements (16) can be moved towards and away from one another actively or passively relative to one another.

7. Apparatus according to any of claims 5-6, **characterised in that**
there are integrated into at least one revolving element (16) at least two support elements (17) which can be displaced actively or passively relative to the centre (15) of the revolving element (16), and the conductor (12) runs around the revolving element (16) via the support elements (17).

8. Apparatus according to any of claims 5-7, **characterised in that**
at least one revolving element (16) is mounted so as to be fixed or rotatable relative to the unit (10).

9. Apparatus according to any of claims 5-8, **characterised in that**
the conductor (12) runs around at least one revolving element (16) in a spiral or helical form.

10. Apparatus according to any of the preceding claims, **characterised in that**
the unit (10) is designed to fit interchangeably into an appropriate retainer, in particular a spindle unit.

11. Apparatus according to any of the preceding claims, **characterised in that** energy and/or signals are transmitted with the radiation.

12. Apparatus according to any of the preceding claims, **characterised in that** the conductor (12) is a fibre optic cable.

13. Apparatus according to any of the preceding claims, **characterised in that** the radiation is laser radiation.

## Revendications

1. Dispositif (1) pour revêtir des pièces, qui, au moins par tronçons, sont de préférence en bois, en matériaux en bois, en matière plastique ou similaire, avec une source de rayonnement pour générer un rayonnement,
un agrégat (10) pour appliquer un matériau de revêtement sur une surface d'une pièce qui est mobile de façon active et/ou passive par rapport à la source de rayonnement,
**caractérisé en ce que** le dispositif comporte un dispositif de transmission (2) avec un conducteur pour la transmission du rayonnement de la source de rayonnement à l'agrégat (10), le dispositif de transmission (2) étant disposé entre la source de rayonnement et l'agrégat (10) et comporte un point d'introduction (13) dans le conducteur (12) qui est fixe par rapport à un point de rotation (18) de l'agrégat ainsi qu'un point de transfert (14) dans l'agrégat qui est fixe par rapport à l'agrégat (10), le dispositif de transmission (2) étant équipé pour compenser un changement de l'alignement entre l'agrégat (10) et la source de rayonnement entre le point d'introduction (13) et le point de transfert (14).

2. Dispositif selon la revendication 1, **caractérisé en ce**
**qu'**au moins une composante appartenant à l'agrégat (10), en particulier une composante qui change le rayonnement dans sa géométrie, sa direction ou son intensité, se raccorde sur le point de transfert (14).

3. Dispositif selon la revendication 2, **caractérisé en ce**
**qu'**entre la source de rayonnement et le point d'introduction (13) se trouve de préférence au moins un élément de liaison, de préférence un conducteur d'ondes lumineuses, en particulier avec un couplage de fibres, ou un autre quelconque élément optique.

4. Dispositif selon la revendication 2 ou 3, **caractérisé en ce qu'**entre le point de transfert (14) et une composante se trouvant dans l'agrégat (10), se trouve de préférence au moins un élément de liaison, de préférence un conducteur d'ondes lumineuses, en particulier avec un couplage de fibres, ou un autre quelconque élément optique.

5. Dispositif selon l'une des revendications précédentes, **caractérisé en ce que** le dispositif de transmission (2) contient au moins un élément périphérique (16), de préférence conçu en tant que disque ou cône, le point central (15) d'au moins un élément périphérique (16) coïncide avec le point de rotation (18) de l'agrégat (10) et au moins un élément périphérique (16) est entouré au moins une fois par le conducteur (12).

6. Dispositif selon la revendication 5, **caractérisé en ce qu'**au moins deux éléments périphériques (16) sont mobiles l'un vers l'autre et s'écartant l'un de l'autre de façon active et/ou passive.

7. Dispositif selon l'une des revendications 5-6, **caractérisé en ce que** dans au moins un élément périphérique (16) sont intégrés au moins deux éléments d'appui (17) qui peuvent être déplacés de façon active ou passive par rapport au point central (15) de l'élément périphérique (16), et le conducteur (12) entoure l'élément périphérique (16) via les éléments d'appui (17).

8. Dispositif selon l'une des revendications 5-7, **caractérisé en ce qu'**au moins un élément périphérique (16) est agencé de façon fixe ou de façon rotative par rapport à l'agrégat (10).

9. Dispositif selon l'une des revendications 5-8, **caractérisé en ce que** le conducteur (12) entoure au moins un élément périphérique (16) de façon spiroïdale ou hélicoïdale.

10. Dispositif selon l'une des revendications précédentes, **caractérisé en ce que** l'agrégat (10) est réalisé en pouvant être remplaçé, dans un logement approprié, en particulier une unité de broche.

11. Dispositif selon l'une des revendications précédentes, **caractérisé en ce que** de l'énergie et/ou des signaux sont transmis avec le rayonnement.

12. Dispositif selon l'une des revendications précédentes, **caractérisé en ce que** le conducteur (12) est un conducteur d'ondes lumineuses.

13. Dispositif selon l'une des revendications précédentes, **caractérisé en ce que** le rayonnement est un rayonnement laser.
